# EUROPÄISCHE PATENTSCHRIFT

(11) **EP 1 786 354 B1**
(45) Veröffentlichungstag und Bekanntmachung des Hinweises auf die Patenterteilung: **14.09.2016**
(21) Anmeldenummer: 05773737.1
(22) Anmeldetag: 30.08.2005
(51) Int. Cl.: A61C 8/00

(54) **DENTALES IMPLANTATSYSTEM**
DENTAL IMPLANT SYSTEM
SYSTEME D'IMPLANT DENTAIRE

(30) Priorität: 31.08.2004 EP 04405542
(43) Veröffentlichungstag der Anmeldung: 23.05.2007
(73) Patentinhaber: Denta Vision GmbH, 4665 Oftringen (CH)
(72) Erfinder: SCHÖNENBERGER, Alwin, 8572 Berg (CH)
(74) Vertreter: Frei Patent Attorneys
(86) Internationale Anmeldenummer: PCT/CH2005/000506
(87) Internationale Veröffentlichungsnummer: WO 2006/024186

(56) Entgegenhaltungen:
- WO-A-2004/002359
- FR-A- 2 695 823
- US-A1- 2003 031 982
- US-B1- 6 431 867
- US-B1- 6 726 481

## Beschreibung

Die Erfindung liegt auf dem Gebiete der Medizinaltechnik und betrifft ein dentales Implantatsystem nach dem Oberbegriff des ersten unabhängigen Patentanspruchs. Das dentale Implantatsystem weist ein Dentalimplantat und mindestens ein Aufbauelement auf, wobei das Implantat im wesentlichen den Wurzelbereich eines künstlichen Zahnes und das Aufbauelement mindestens den an den Wurzelbereich anschliessenden Teil des Kronenbereichs bildet. Die Erfindung betrifft ferner ein Verfahren und ein Kit nach den Oberbegriffen der entsprechenden, unabhängigen Patentansprüche, wobei das Verfahren für die Implantation und den Aufbau des Implantatsystems dient und das Kit für die Durchführung des Verfahrens geeignet ist.

Auf dem Dentalmarkt sind verschiedene Implantatsysteme verfügbar. Sie basieren beispielsweise auf einem Schraubenkörper, auf dem eine künstliche Krone entweder direkt oder indirekt über ein Zwischenstück (Abutment) aufgebaut wird. Zur Befestigung von Krone oder Zwischenstück weist der Schraubenkörper beispielsweise ein von der koronalen Stirnseite axial verlaufendes Innengewinde auf, in das für den Aufbau eine entsprechende Okklusalschraube eingeschraubt wird.

Der Schraubenkörper wird beispielsweise in einer entsprechend erstellten Öffnung im alveolären Knochen implantiert und für eine sogenannte, gedeckte Einheilung mit Weichgewebe bedeckt. Nach der Einheilung wird das Weichgewebe über dem Implantat entfernt und das Implantat wird aufgebaut, wobei die um den Umfang des aufgebauten Implantats verlaufende Trennlinie zwischen der köronalen Stirnseite des Implantats und dem Aufbauelement (Abutment oder Krone), der sogenannte Mikrospalt (micro gap), etwa in den Bereich der natürlichen Knochenoberfläche zu liegen kommt.

Bekannte Implantatsysteme weisen einen Mikrospalt auf, der durch eine koronale Stirnseite oder Schulter des Implantates vorgegeben ist und der in den meisten Fällen in einer Ebene senkrecht zur Implantatachse verläuft. Es zeigt sich, dass der Mikrospalt ein physiologisch relevantes Merkmal eines Dentalimplantes ist, denn bei natürlicher Belastung eines auf einem Implantat basierenden künstlichen Zahnes entwickelt sich das Knochengewebe derart (Rückbildung oder Wachstum), dass der Mikrospalt wie die natürliche Schmelz/Zement-Grenze, um durchschnittlich 2 bis 3 mm (biologische Breite, biological width) über die Knochenoberfläche zu liegen kommt. Wenn also der Mikrospalt unmittelbar nach der Implantation näher an der Knochenoberfläche liegt oder gar im Knochengewebe, wird sich der Knochen zurückbilden. Wenn der Mikrospalt weiter von der Knochenoberfläche entfernt liegt, wird das Knochengewebe gegen das koronale Ende des Implantas wachsen, wenn entsprechende Bedingungen herrschen und das Implantat eine für das Knochenwachstum geeignete Oberfläche aufweist. Wenn der Mikrospalt am Implantat in einer senkrecht zur Implantatachse ausgerichteten Ebene liegt, wird sich das Knochengewebe derart einstellen, dass die Knochenoberfläche rund um das Implantat im wesentlichen ebenfalls in einer Ebene verläuft, wobei die Ebene der Knochenoberfläche gegenüber der Ebene des Mikrospaltes um die biologische Breite gegen den Apex des Implantates verschoben ist.

An einem natürlichen Zahn ist der Verlauf der Schmelz/Zement-Grenze und der Knochenoberfläche nicht eben sondern girlandenförmig, das heisst, sie liegen zwischen den Zähnen weiter koronal und lingual/bukkal liegen sie weiter apikal. Diese Girlandenform geht bei der Verwendung von Implantatsystemen mit den genannten, entsprechend nahe an der Knochenoberfläche liegenden, "ebenen" Mikrospalten durch Knochenrückbildung verloren, ein Phänomen, das besonders ausgeprägt ist, wenn zwei oder mehr als zwei Implantate unmittelbar nebeneinander stehen.

Um die oben genannte, unerwünschte Wirkung von ebenen Mikrospalten zu vermeiden, sind in neuester Zeit auch Implantatsysteme bekannt geworden, die einen girlandenförmigen Mikrospalt vorgeben. Derartige Implantatsysteme sind beispielsweise beschrieben in den Publikationen US 6 431 867 B1 (Gittelson et al.) oder US-2004/0033470 A1 (Wohrle et al.). Letztere weist beispielsweise ein aus Titan bestehendes Implantat mit einem Schraubenkörper auf, der mit einem Gewinde und einer die Osseointegration fördernden Oberfläche ausgerüstet ist, und mit einem am koronalen Ende des Schraubenkörpers anschliessenden Kragen, der eine koronale Stirnseite aufweist. Dabei ist die koronale Stirnseite nicht eben sondern hat in Anpassung an die Form eines natürlichen Kieferkammes eine wellige Form, das heisst eine girlandenförmige, den Mikrospalt vorgebende Aussenkante. Es wird auch vorgeschlagen, einen an die koronale Stirnseite grenzenden Bereich der Mantelfläche mit einer Breite, die etwa der biologischen Breite entspricht, als polierte Oberfläche (nicht osseointegrativ wirkend) auszurüsten und auch die um das Implantat verlaufende Grenzlinie zwischen osseointegrativer Oberfläche (Wurzelbereich) und polierter Oberfläche (Kragenbereich) etwa parallel zur Aussenkante der Stirnseite, also ebenfalls girlandenförmig zu gestalten. Auf diesem Implantat wird mittels Innengewinde und entsprechender Schraube ein Abutment montiert, dessen dem Implantat zugewandte Stirnseite an die koronale Stirnseite des Implantates angepasst, das heisst ebenfalls wellenförmig ausgestaltet ist.

WO 2004/002359 A1 (Aravena und Kumar) offenbart ein Implantatsystem mit einem Implantatteil, welches in einem koronalen Implantatbereich eine Kugelform aufweist, und einem Aufbauteil. Im Unterschied zu den obigen Publikationen ist die Drehposition des Aufbauteils auf dieser Kugelform unabhängig vom Implantatteil wählbar.

Der Mikrospalt zwischen Implantat und Aufbauelement verläuft also gemäss US-2004/0033470 nicht in einer Ebene quer zur Implantatachse sondern ist durch seine Girlandenform bedeutend besser an die natürliche Form des Knochenkammes angepasst. Wenn das Implantat derart implantiert werden kann, dass der girlandenförmige Mikrospalt um die biologische Breite über der natürlichen Knochenoberfläche zu liegen kommt, kann ein Knochenabbau im wesentlichen verhindert werden. Dies ist nicht nur betreffend Stabilität des Implantates wünschenswert sondern auch aus ästhetischen Gründen. Wenn aber das Implantat schraubenförmig ist und durch Einschrauben im Knochengewebe verankert werden soll, wie dies in US-2004/0033470 beschrieben ist, ist die angesprochene Verhinderung des Knochenabbaus aber nur möglich mit einer Implantation, die eine kaum realisierbare Präzision aufweisen muss. Das Implantat muss nicht nur bezüglich Tiefe im Knochen bzw. relativ zur Knochenoberfläche sehr genau positioniert werden, sondern auch bezüglich Drehposition, nämlich derart, dass der Mikrospalt nicht nur um die biologische Breite über die Knochenoberfläche zu liegen kommt, sondern dass auch die Girlandenform des Mikrospaltes genau auf die entsprechende Form der natürlichen Knochenoberfläche ausgerichtet ist. Dazu ist es notwendig, die Verankerungstiefe sehr genau auf die Gewindesteigung abzustimmen, was nicht nur schwierig realisierbar, sondern, insbesondere bei Verwendung eines Gewindes mit relativ grosser Steigung auch eine relevante Einschränkung darstellen kann.

US 6726481 (Leonard et al.) offenbart ein Implantatsystem mit einem Implantatteil, welches einen konischen koronalen Implantatbereich aufweist, und einem Aufbauteil.

In allen, oben kurz beschriebenen Implantatsystemen wird die axiale Position und die Form des Mikrospaltes einzig durch das Implantat definiert. Wenn das Implantat implantiert und eingeheilt ist und der Mikrospalt bezüglich axialer Position und Form relativ zur Knochenoberfläche nicht genau um die biologische Breite verschoben ist, kann eine meist unerwünschte Veränderung der Knochenoberfläche nicht mehr verhindert werden.

Die Erfindung stellt sich nun die Aufgabe, diesen Nachteil der bekannten Implantatsysteme zu beseitigen und ein dentales Implantatsystem zu schaffen, mit dem es möglich wird, die axiale Position des Mikrospaltes und gegebenenfalls auch dessen Form an das natürliche Niveau des alveolären Knochens und seine Form rund um das Implantat oder an andere Begebenheiten anzupassen mit einer Genauigkeit und Einfachheit, die mit bekannten Implantatsystemen nicht erreichbar sind.

Diese Aufgabe wird gelöst durch das dentale Implantatsystem, wie es in den Patentansprüchen definiert ist.

Die Grundidee des erfindungsgemässen Implantatsystems besteht darin, dass die axiale Position des Mikrospaltes am Implantat und die Form dieses Mikrospaltes nicht vom Implantat definiert werden sondern von einem Aufbauelement, das nach der Implantation und vorteilhafterweise auch nach der Einheilung das Implantats auf dem Implantat montiert wird. Dieses Aufbauelement wird je nach Tiefe des implantierten Implantates relativ zur Knochenoberfläche und je nach Form der vorhandenen oder erwünschten Knochenoberfläche rund um das implantierte Implantat ausgewählt und/oder entsprechend bearbeitet, derart, dass der Mikrospalt um genau die biologische Breite über der vorhandenen oder erwünschten Knochenoberfläche einstellbar ist. Dies bedeutet, dass der Mikrospalt bezüglich axialer Position und Form genau an die Knochengegebenheiten angepasst werden kann und trotzdem an die Implantationsgenauigkeit viel kleinere Ansprüche gestellt werden müssen als dies mit den bekannten Implantatsystemen der Fall ist.

Das erfindungsgemässe Implantatsystem weist also wie bekannte Implantatsysteme ein Dentalimplantat und mindestens ein Aufbauelement auf. Das Dentalimplantat hat einen apikalen und einen koronalen Implantatbereich. Der koronale Implantatbereich schliesst im wesentlichen stufenlos an den apikalen Implantatbereich an und hat die Form eines Zylinders mit beispielsweise einer axialen Länge von ca. 4 bis 8 mm. Der Zylinder des koronalen Implantatbereiches weist vorteilhafterweise relativ zur Implantatsachse eine hohe Rotationssymmetrie auf. Sowohl der apikale als auch der koronale Implantatbereich weisen eine osseointegrativ ausgerüstete Mantelfläche auf. Das Implantat wird vorteilhafterweise für eine transmukosale Einheilung dimensioniert und implantiert, das heisst, seine koronale Stirnseite, die für die Befestigung des mindestens einen Aufbauelementes ausgerüstet ist, wird nach der Implantation ausserhalb von Knochen- und Weichgewebe liegen.

Das mindestens eine Aufbauelement des erfindungsgemässen Implantatsystems ist kappenförmig und wird über den koronalen Implantatbereich gestülpt. Wenn das kappenförmige Aufbauelement auf dem koronalen Implantatbereich aufgesetzt ist, umschliesst ein sich apikal erstreckender Mantelbereich des Aufbauelementes den koronalen Implantatbereich mindestes teilweise, wobei der Saum dieses Mantelbereichs zusammen mit der Mantelfläche des koronalen Implantatbereichs den Mikrospalt bildet. Die axiale Länge des Mantelbereichs bestimmt dabei die axiale Position des Mikrospaltes am Implantat, der Verlauf des Mantelbereich-Saums bestimmt die Form des Mikrospaltes, die beispielsweise girlandenförmig ist. Während also an Implantatsystemen gemäss dem Stande der Technik immer die koronale Stirnseite oder eine stirnseitige Schulter des Implantates die axiale Position und die Form des Mikrospaltes bestimmt, ist der Mikrospalt des erfindungsgemässen Implantatsystems weitgehend unabhängig von dieser Stirnseite und kann auf der Mantelfläche des koronalen Implantatbereichs nach der Einheilung bezüglich axialer Position und vorteilhafterweise auch bezüglich Form in weiten Grenzen frei wählbar eingestellt werden. Dazu wird beispielsweise ein entsprechend vorfabriziertes Aufbauelement mit einem Mantelbereich einer gewünschten axialen Länge und gegebenenfalls einem Mantelbereich-Saum der gewünschten Form auf dem koronalen Implantatbereich aufgesetzt. Ist der Saum girlandenförmig, ist es wichtig, dass der koronale Implantatbereich die oben genannte Rotationssymmetrie aufweist, so dass auch die Drehposition des Aufbauelementes relativ zum Implantat in weiten Grenzen einstellbar ist.

Das kappenförmige Aufbauelement ist beispielsweise als hülsenförmiges Zwischenstück (Mesiostruktur) ausgebildet, auf dem mittels Zement oder bukkaler Verschraubung oder Verbolzung mindestens ein weiteres Aufbauelement zu einer prothetischen Suprakonstruktion aufbaubar ist. Das kappenförmige Aufbauelement kann aber auch selbst diese Suprakonstruktion darstellen.

Vorteilhafterweise ist die koronale Stirnseite des Implantates derart ausgerüstet, dass anstelle eines kappenförmigen Aufbauelements wie oben beschrieben auch ein von der Stirnseite des Implantats sich nur koronal erstreckendes Aufbauelement darauf montierbar ist, dies insbesondere dann, wenn der Mikrospalt nicht weiter apikal als die Stirnseite des Implantats liegen soll.

Die Ausbildung des apikalen Implantatbereichs und die koronale Ausbildung des kappenförmigen Aufbauelementes als Mesiostruktur oder prothetische Suprakonstruktion sind nicht Gegenstand der Erfindung. Für diese Bereiche des erfindungsgemässen Implantatsystems wird auf die gängigen Methoden der Dentaltechnik verwiesen.

Beispielhafte Ausführungsformen des erfindungsgemässen dentalen Implantatsystems werden anhand der folgenden Figuren im Detail beschrieben. Dabei zeigen:
- **Figuren 1A bis 1C**: eine erste, sehr einfache Ausführungsform des erfindungsgemässen Implantatsystems und dessen Implantation und Aufbau;
- **Figuren 2A bis 2C**: eine bevorzugte Ausführungsform des erfindungsgemässen Implantatsystems als axialer Schnitt (Fig. 2A) und Querschnitt durch den koronalen Implantatbereich und das darauf gesetzte, kappenförmige Aufbauelement (Fig. 2B und 2C);

- **Figur 3**: das Implantat gemäss Figuren 2A bis 2C mit einem Aufbauelement, das sich nur koronal von der Stirnseite des Implantats erstreckt;
- **Figuren 4 bis 6**: axiale Schnitte durch weitere, beispielhafte Ausführungsformen des erfindungsgemässen Implantatsystems bzw. Implantats;
- **Figuren 7 bis 10**: der koronale Bereich von zwei weiteren beispielhaften Ausführungsformen des Implantats für das erfindungsgemässe Implantatsystem (Figs. 7 und 9: axialer Schnitt; Figs. 8 und 10: Draufsicht).

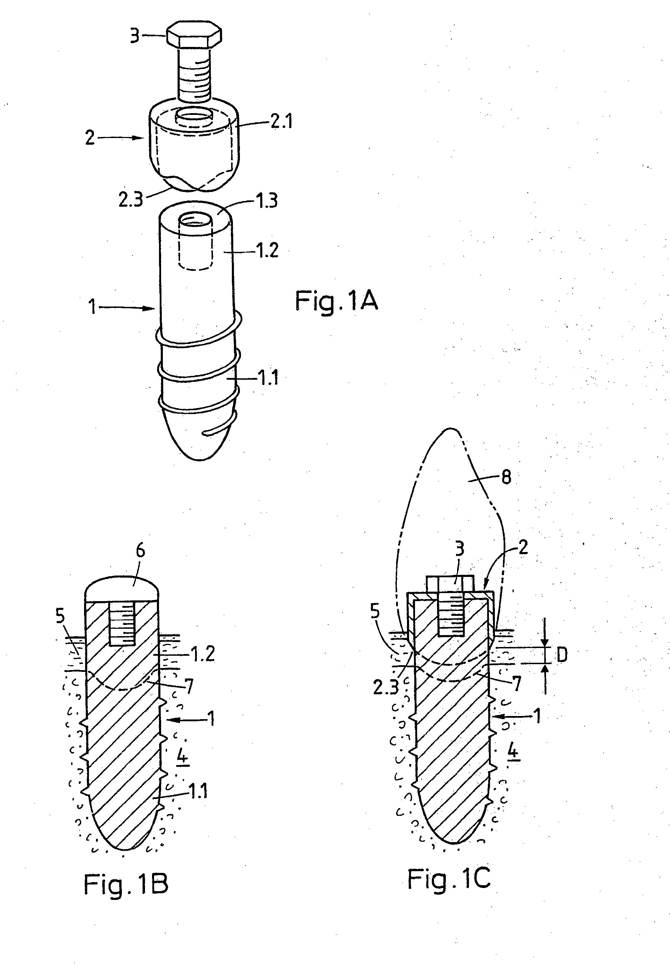

**Figuren 1A bis 1C** zeigen an einem sehr einfach ausgestalteten Beispiel des erfindungsgemässen Implantatsystems dessen Hauptmerkmale und dessen Implantation und Aufbau. Wie bereits weiter oben erläutert und wie aus Figur 1A ersichtlich ist, weist das erfindungsgemässe Implantatsystem ein Dentalimplantat 1 und ein kappenförmiges Aufbauelement 2 auf, wobei das Implantat 1 einen apikalen Bereich 1.1 und einen koronalen Bereich 1.2 mit einer koronalen Stirnseite 1.3 und das Aufbauelement 2 einen sich apikal erstreckenden Mantelbereich 2.1 und einen Stirnbereich 2.2 aufweist. Der koronale Implantatbereich 1.2 schliesst beispielsweise stufenlos an den apikalen Implantatbereich 1.1 an und hat im dargestellten Fall im wesentlichen die Form eines Kreiszylinders, der wie der apikale Implantatbereich 1.1 eine osseointegrativ ausgerüstete Oberfläche aufweist. Der Mantelbereich 2.1 des Aufbauelements 2 ist derart an den koronalen Implantatbereich 1.2 angepasst, dass, wenn das Aufbauelement 2 auf dem koronalen Implantatbereich 1.2 aufgestülpt ist, der Mantelbereich 2.1 des Aufbauelements 2 eng (mit in der Zahntechnik üblicher Toleranz von ca. 50µm oder weniger) an der Mantelfläche des koronalen Implantatbereichs 1.2 anliegt. Der Stirnbereich 2.2 des Aufbauelements 2 ist mit geeigneten Mitteln (z.B. Okklusalschraube 3) auf der koronalen Stirnseite 1.3 des Implantats 1 befestigbar.

Offensichtlich ist die axiale Position des Mikrospaltes, der zwischen Mantelbereich 2.1 und Mantelfläche des koronalen Implantabereichs entlang der Saumlinie 2.3 verläuft, von der axialen Länge des Mantelbereiches 2.1 abhängig. Die Form des Mikrospaltes ist vom Verlauf dieser Saumlinie 2.3 abhängig und die Drehposition dieser Form von den relativen Drehpositionen von Implantat 1 und Aufbauelement 2. Diese relative Drehposition ist bei nicht ebener Form der Saumlinie 2.3, also wenn diese beispielsweise wie dargestellt girlandenförmig verläuft, vorteilhafterweise möglichst frei wählbar, das heisst, der koronale Implantatbereich weist vorteilhafterweise eine hohe Rostationssymmetrie auf, die Implantatachse bildet also für den koronalen Implantatbereich 1.2 eine möglichst hochzählige Rotationsachse, derart, dass dieser Bereich durch Rotation um einen möglichst kleinen Winkel mit sich selbst in Deckung gebracht werden kann. Vorteilhafterweise ist die Rotationssymmetrie höher als acht-zählig (Drehwinkel bis zur Deckung < 45°). Wenn der koronale Implantatbereich 1.2, wie in der Figur 1 dargestellt, kreiszylindrisch ausgebildet ist und der Mantelbereich 2.1 des Aufbauelements 2 einen entsprechenden Hohlzylinder bildet, sind beliebig viele relative Drehpositionen von Implantat 1 und Aufbauelement 2 möglich. Allerdings müssen in einem solchen Falle Torsionskräfte auf den Zahnaufbau allein durch das Befestigungsmittel (Schraube 3) auf das Implantat übertragen werden, was gegebenenfalls nicht vorteilhaft ist. Aus diesem Grunde ist es sinnvoll (siehe weiter unten), zwischen Implantat 1 und Aufbauelement 2 rotationssymmetrische Elemente zur Fixierung einer einmal gewählten relativen Drehposition zwischen Implantat und Aufbauelement vorzusehen.

Das Implantat 1 besteht aus einem für Dentalimplantate üblicherweise verwendeten Material, vorzugsweise aus Titan oder aus einer Titanlegierung und seine Mantelfläche ist in an sich bekannter Weise für eine Förderung der Osseointegration ausgerüstet. Der apikale Implantatbereich 1.1 ist, ebenfalls in bekannter Weise, für eine Verankerung im Knochengewebe ausgerüstet, vorzugsweise ist er als Schraube, beispielsweise als selbstschneidende Schraube ausgebildet. Das kappenförmige Aufbauelement 2 besteht aus einem für künstliche Zahnaufbauten üblichen Material, beispielsweise aus Gold, aus einer hochgoldhaltigen Legierung, aus Zirkon oder Titan, aus einem Keramik-Metall-Verbund oder aus einem ausbrennbaren Kunststoff. Zur Befestigung des Aufbauelementes 2 auf der koronalen Stirnseite 1.3 des Implantats 1 weisen Implantat 1 und Aufbauelement 2 beispielsweise eine axiale Bohrung auf, die mindestens im Implantat mit einem Innengewinde ausgerüstet ist, und das Aufbauelement 2 wird mittels einer Okklusalschraube 3 am koronalen Implantatbereich 1.2 befestigt.

Figur 1B zeigt das Implantat 1 der Figur 1A in einem implantierten Zustand (axialer Schnitt). Der schraubenförmige, apikale Implantatbereich 1.1 ist im Knochengewebe 4 verankert, der koronale Implantatbereich 1.2 reicht durch das Weichgewebe 5 hindurch und ist für die Einheilphase beispielsweise mit einer Einheilschraube 6 abgedeckt. Dabei verläuft die natürliche Knochenoberfläche beispielsweise girlandenförmig um das Implantat 1 herum, wie dies durch die Linie 7 angedeutet ist.

Nach der Einheilphase, die durch Figur 1B illustriert ist, wird die Einheilschraube 6 entfernt und wird das Aufbauelement 2 auf den koronalen Implantatbereich 1.2 aufgesetzt und mit der Okklusalschraube 3 befestigt, wie dies in der Figur 1C gezeigt ist. Durch Wahl eines Aufbauelements 2 mit einer entsprechenden axialen Mantellänge und Saumlinienform und durch Wahl einer entsprechenden Drehposition des Aufbauelementes 2 beim Aufsetzten sowie gegebenenfalls durch eine vorgängige Bearbeitung der Saumlinie 2.3 kann der zwischen der Mantelfläche des koronalen Implantatbereichs 1.2 und dem Mantelbereich 2.1 des Aufbauelementes 2 sich entlang der Saumlinie 2.3 erstreckende Mikrospalt beispielsweise genau um die biologische Breite D (üblicherweise 2 bis 3 mm) über der natürlichen Knochenoberfläche (Linie 7) eingestellt werden, wodurch eine Knochenrückbildung weitgehend verhindert werden kann. Durch entsprechend tiefere Einstellung des Mikrospaltes bzw. der Saumlinie 2.3 kann auch ein gezielter Knochenabbau auf eine erwünschte Linie 7 um das Implantat 1 provoziert werden.

Das Aufbauelement 2 ist koronal gegebenenfalls als Mesiostruktur ausgestaltet, das heisst, es ist für das Aufsetzen eines weiteren Aufbauelements, z.B. einer Krone 8 ausgerüstet. Dazu weist das Aufbauelement 2 beispielsweise einen als Befestigungsmittel ausgestalteten, koronalen Bereich auf, an dem die Krone 8 beispielsweise mittels Zement oder lingualer Verschraubung oder Verbolzung befestigbar ist. Es ist auch möglich, die Okklusalschraube 3 als Befestigungsmittel für weitere Aufbauelemente zu verwenden, also beispielsweise in ihrem Kopfbereich mit einem Innengewinde zu versehen. Ein koronaler Bereich des Aufbauelements 2 kann aber auch direkt als vollständige Suprastruktur ausgebildet sein, die beispielsweise mittels okkluso-transversaler Verschraubung direkt am Implantat 1 befestigt wird.

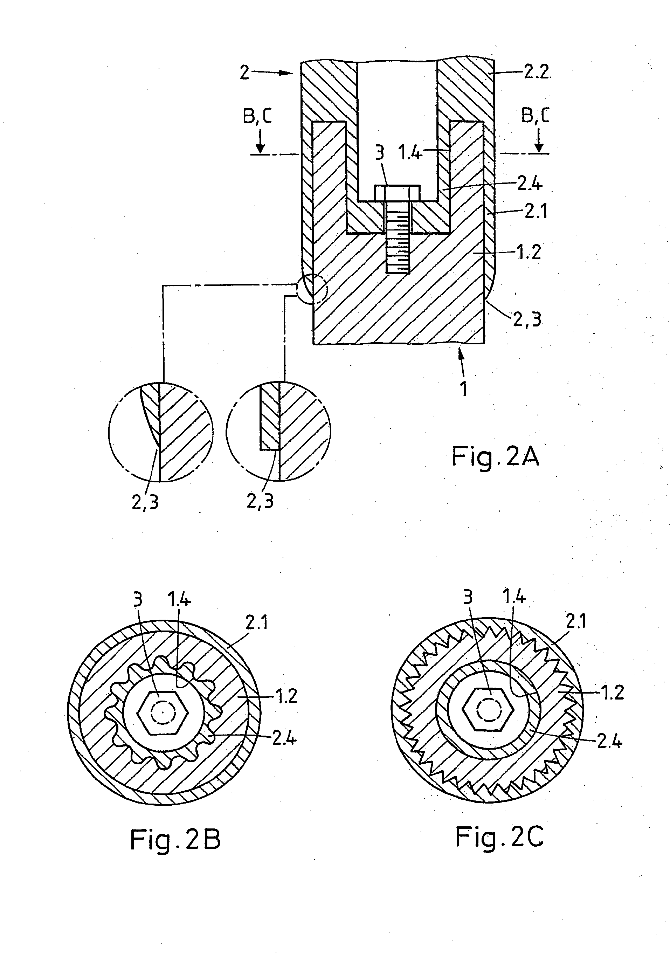

Figuren 2A bis 2C zeigen eine bevorzugte Ausführungsform des erfindungsgemässen Implantatsystems als axialen Schnitt (Figur 2A) und Querschnitt (Figuren 2B und 2C) durch den koronalen Implantatbereich 1.2 und das darauf aufgesetzte, kappenförmige Aufbauelement 2. Gleiche Elemente sind mit gleichen Bezugsziffern bezeichnet wie in den vorgängigen Figuren. Der koronale Implantatbereich 1.2 ist im vorliegenden Falle rohrförmig, das heisst mit einer axialen Vertiefung 2.4, ausgestaltet und der Stirnseitenbereich 2.2 des Aufbauelements 2 ist durch einen sich apikal erstreckenden, ebenfalls rohrähnlichen Fortsatz 2.4 an die Vertiefung 2.4 derart angepasst, dass der Fortsatz 2.4 in der Vertiefung 1.4 positionierbar ist und das Aufbauelement 2 mittels Okklusalschraube 3 auf dem Grund der Vertiefung 1.4 befestigbar ist.

Die Ausführung des koronalen Implantatbereichs 1.2 mit axialer Vertiefung 1.4, in die das Aufbauelement 2 hineinreicht, hat den Vorteil, dass radial auf das Implantatsystem wirkende Kraftkomponenten durch die ineinandergreifenden Bereiche von Implantat 1 und Aufbauelement 2 aufgenommen werden und dadurch nicht auf die Okklusalschraube 3 wirken. Diese muss also nur für die Aufnahme von Zugkräften ausgelegt werden, so dass sie verglichen mit bekannten Okklusälschrauben kleiner und insbesondere dünner sein kann, wodurch gegebenenfalls auch das Implantat gegenüber bekannten Implantaten reduziert werden kann. Ein weiterer Vorteil der versenkten Okklusalschraube 3 besteht darin, dass der koronale Implantatbereich 1.2 für eine gegebenenfalls notwendige Abwinklung (Achskorrektur) eines Aufbaus gegenüber der Implantatachse bearbeitet werden kann, ohne dass dadurch die Okklusalschraube 3 gefährdet würde.

Figur 2A zeigt auch zwei beispielhafte Ausführungsformen der Saumlinie 2.3 des Aufbauelements 2. Der Mantelbereich 2.1 kann spitz zulaufend ausgestaltet sein und eine linienförmige Saumlinie bilden oder der Mantelbereich kann stumpf enden, so dass die Saumlinie eine Stufe bildet.

Figuren 2B und 2C zeigen Mittel zur Fixierung der beim Aufsetzen des Aufbauelements 2 auf den koronalen Implantatbereich 1.2 gewählten relativen Drehpositionen von Implantat 1 und Aufbauelement 2. Dies sind gemäss Figur 2B axial verlaufende, ineinandergreifende Nuten und entsprechende Kämme auf der im wesentlichen kreiszylindrisch geformten Aussenoberfläche des Fortsatzes 2.4 des Aufbauelements 2 und der Innenoberfläche der axialen Vertiefung 1.4 des rohrförmig ausgebildeten, koronalen Implantatbereichs 1.2. Zur Erfüllung der geforderten hohen Rotationssymmetrie sind alle Nuten und Kämme gleich und gleichmässig verteilt und für eine möglichst freie Wählbarkeit der Drehposition sind möglichst viele Nuten und Kämme vorgesehen. Gemäss Figur 2C sind die ineinandergreifenden Nuten und Kämme an der im wesentlichen zylindrischen Innenoberfläche des Hohlraums im Mantelbereich 2.1 des Aufbauelements 2 und auf der ebenfalls im wesentlichen zylindrischen Mantelfläche des koronalen Implantatbereichs angeordnet. Es sind auch Ausführungsformen denkbar, in denen sowohl innen als auch aussen am rohrförmigen, koronalen Implantatbereich 1.2 und an den entsprechenden Flächen des Aufbauelements 2 Nuten und Kämme vorgesehen sind.

Implantate 1 und Aufbauelemente 2 für erfindungsgemässe Implantatsysteme, wie sie beispielsweise in den Figuren 2A bis 2C dargestellt sind, werden vorteilhafterweise in verschiedenen Grössen vorfabriziert, das heisst Implantate mit Längen von 10, 12, 14 und 16 mm und mit je einem gleichen koronalen Implantatbereich. Dazu werden an den genormten, koronalen Implantatbereich angepasste Aufbauelemente vorfabriziert. Diese haben beispielsweise ebene, gegebenenfalls später zu bearbeitende Saumlinien an Mantelbereichen mit verschiedenen axialen Längen und verschiedene Verwinkelungen von beispielsweise 0°, 10° oder 20°. Sie können auch Saumlinien aufweisen mit einem Verlauf, der dem Knochenverlauf um Schneidezähne, Eckzähne und Seitenzähne angepasst ist. Ein geeignetes Implantat wird implantiert und anhand eines Abdrucks, der nach der Einheilung angefertigt wird, wird ein Aufbauelement ausgewählt und seine günstigste Drehpositiön relativ zum Implantat bestimmt. Anhand des Abdrucks wird auch bestimmt, wie die Saumlinie eines vorfabrizierten Aufbauelementes zu bearbeiten ist, und gegebenenfalls, wie der koronale Implantatbereich für eine Verwinkelung zu bearbeiten ist. Es ist selbstverständlich auch möglich, in jedem Fall anhand des Abdruckes ein Aufbauelement 2 speziell herzustellen.

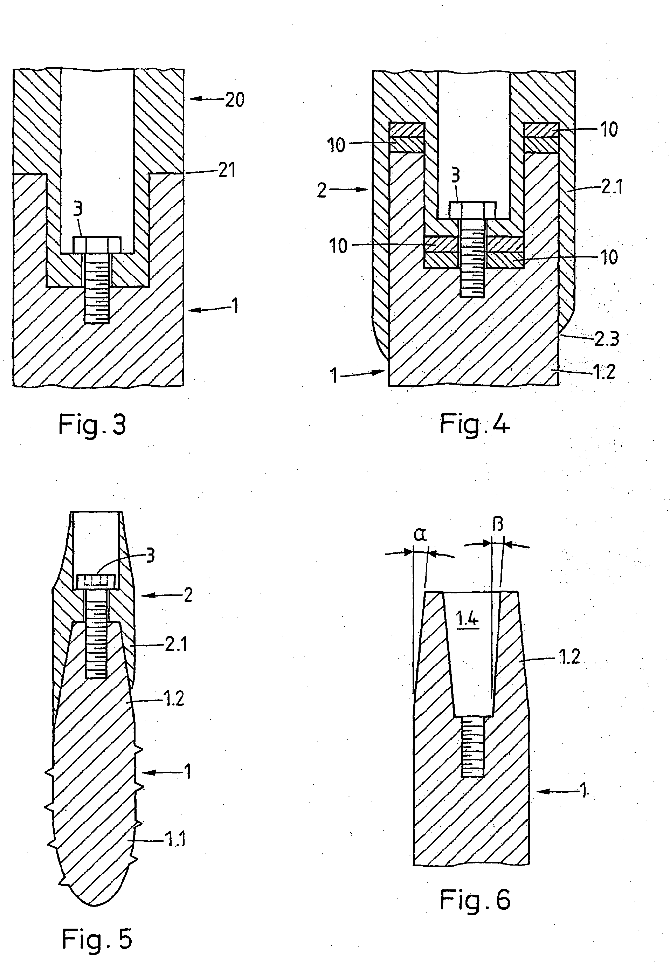

**Figur 3** zeigt, dass das Implantat 1 des erfindungsgemässen Implantatsystems auch mit einem sich nur koronal von der Stirnseite des Implantats erstreckenden Aufbauelement 20; das im Unterschied zum kappenförmigen Aufbauelement 2 keinen Mantelbereich aufweist, kombiniert werden kann. Der Mikrospalt ist in diesem Falle, wie bei bekannten Implantaten, durch die Aussenkante 21 der Stirnseite des Implantates bestimmt und verläuft beispielsweise in einer Ebene. Die Variante gemäss Figur 3 gibt aber dem erfindungsgemässen Implantatsystem eine weitere Flexibilität, denn es kann nach erfolgter Einheilung entschieden werden, ob ein kappenförmiges Aufbauelement oder das sich nur koronal erstreckende Aufbauelement 20 verwendet werden soll, ob also der Mikrospalt von der Stirnseite des Implantats apikal verschoben sein soll oder nicht.

**Figur 4** illustriert eine weitere Methode, mit der an einer Kombination eines vorfabrizierten Implantats 1 und eines vorfabrizierten Aufbauelements 3, die im wesentlichen ausgestaltet sind, wie im Zusammenhang mit den Figuren 2A bis 2C weiter oben beschrieben ist, die axiale Position der Saumlinie 2.3 des Aufbauelementes 2 auf der Mantelfläche des koronalen Implantatbereichs 1.2 eingestellt werden kann. Es werden dazu auf dem Grund der axialen Vertiefung 1.4 und/oder auf der koronalen Implantatstirnseite Distanzringe 10 eingelegt und es wird gegebenenfalls eine entsprechend längere Okklusalschraube 3 verwendet.

Für eine Verschiebung des Mikrospaltes in apikaler Richtung kann gegebenenfalls am implantierten Implantat der koronale Implantatbereich 1.2 durch entsprechende Bearbeitung (Abdrehen) verkürzt werden.

**Figur 5** zeigt eine weitere, beispielhafte Ausführungsform des Implantatsystems, das wiederum ein Implantat 1 und ein kappenförmig ausgestaltetes Aufbauelement 2 aufweist. Im Unterschied zu den vorgehend beschriebenen Ausführungsformen ist der koronale Implantatbereich 1.2 nicht zylindrisch ausgestaltet sondern als sich gegen die koronale Stirnseite verjüngender Kegelstumpf (z.B. Kreiskegelstumpf), über den der Mantelbereich 2.1 des Aufbauelementes 2 in der beschriebenen Weise kappenartig gestülpt ist. Der Kegelstumpf ist vorteilhafterweise steil (kleiner Winkel zwischen Mantelfläche und Parallelen zur Implantatachse) und schliesst in jedem Falle ohne flachere Abstützschulter direkt an den apikalen Implantatbereich 1.1 an. Auch hier ist die relative Drehposition von Implantat 1 und Aufbauelement 2 bzw. girlandenförmiger Saumlinie 2.3 frei wählbar und gegebenenfalls durch axiale, ineinander greifende Nuten und Kämme fixierbar und kann die Saumlinie 2.3 gegebenenfalls durch entsprechende Bearbeitung des Mantelbereiches 2.1 an natürliche oder erwünschte Begebenheiten angepasst werden.

**Figur 6** zeigt eine weitere Ausführungsform eines Implantates 1 für das Implantatsystem, das im wesentlichen ausgerüstet ist, wie das Implantat gemäss Figuren 2A bis 2C oder 3. Im Gegensatz zu den Implantaten der genannten Figuren ist im vorliegenden Fall nicht nur der koronale Implantatbereich 1.2 als steiler Kegelstumpf ausgebildet, wie dies auch in Figur 5 gezeigt ist, sondern auch die axiale Vertiefung 1.4 ist als Hohlkegel ausgebildet. Die Steilheit des Kegelstumpfes, der den koronalen Implantatbereich 1.2 bildet, ist definiert durch den Winkel α, zwischen der Kegelmantelfläche und einer Parallelen zur Implantatachse. Dieser Winkel α soll vorteilhafterweise nicht grösser als 10° sein, insbesondere nicht grösser als 6°. Die durch den entsprechenden Winkel β definierte Steilheit des Hohlkonus (axiale Vertiefung 1.4) kann gleich sein wie die Steilheit des koronalen Implantatbereichs oder weniger steil.

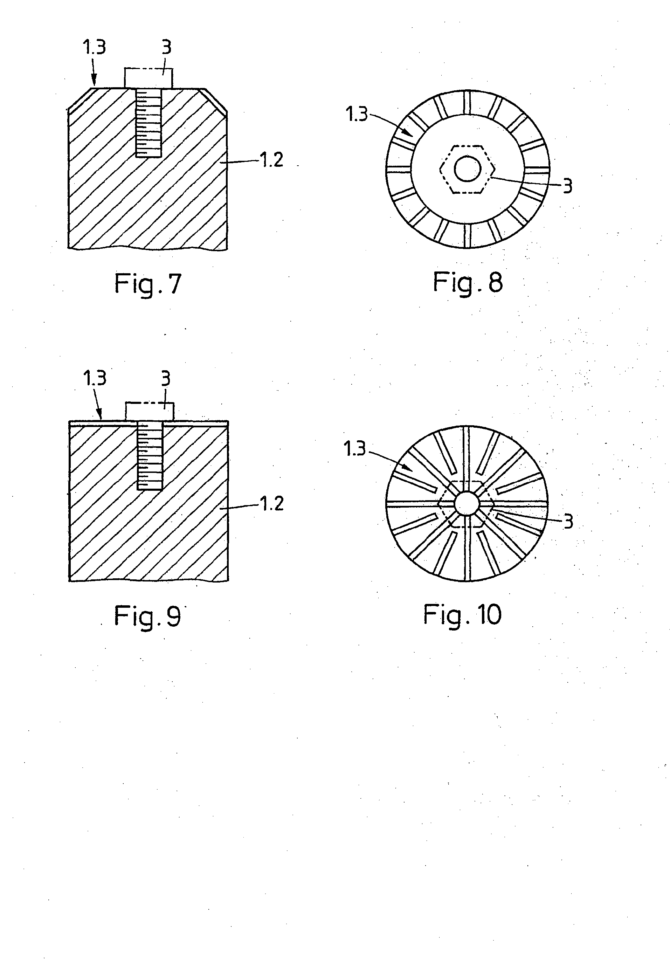

**Figuren 7 bis 10** zeigen zwei weitere Ausführungsformen des koronalen Implantatbereichs 1.2 eines Dentalimplantates, das in einem erfindungsgemässen Implantatsystem anwendbar ist. Figuren 7 und 9 zeigen den koronalen Implantatbereich 1.2 axial geschnitten, Figuren 8 und 10 sind Draufsichten auf die koronale Stirnfläche 1.3.

Der Unterschied der Ausführungsform gemäss Figuren 7 bis 10 zu den weiter oben beschriebenen Ausführungsformen liegt in den Fixiermitteln (z.B. ineinandergreifende Nuten und Kämme), mit deren Hilfe die relative Drehposition zwischen Implantat und Aufbauelement fixiert wird. Diese sind nicht an Mantelflächen von Implantat und Aufbauelement angeordnet, sondern an Stirnflächen 1.3. Die dargestellten Implantate weisen an ihrer koronalen Stirnseite 1.3 keine axiale Vertiefung auf, sondern lediglich eine Gewindebohrung für eine strichpunktiert dargestellte Okklusalschraube 3.

Gemäss Figuren 7 und 8 sind die Fixiermittel auf einem äusseren Bereich der Stirnfläche 1.3 des koronalen Implantatbereichs 1.2 angeordnet, wobei dieser Bereich der Stirnfläche als Mantelfläche eines Kegelstumpfes ausgebildet ist. Selbstverständlich ist ein Stirnbereich eines entsprechenden (nicht dargestellten) Aufbaulements gegengleich auszugestalten. Der Vorteil der kegelförmigen Stirnfläche 1.3 liegt darin, dass sie es einfacher macht, den koronalen Implantatbereich durch Bearbeitung zur verkürzen. Die Fixiermittel gemäss Figuren 9 und 10 erstrecken sich über die ganze, z.B. eben ausgebildete Stirnfläche 1.3 des koronalen Implantatbereichs.

Alle in den Figuren 7 bis 10 dargestellten Nuten und Kämme verlaufen radial zur Achse des koronalen Implantatbereichs.

## Patentansprüche

1. Dentales Implantatsystem, das ein Dentalimplantat (1) und mindestes ein Aufbauelement (2) aufweist,
wobei das Aufbauelement auf einer koronalen Stirnseite des Implantats (1) befestigbar ist,
wobei das Implantat (1) einen koronalen Implantatbereich (1.2) aufweist, der als relativ zur Implantatsachse rotationssymmetrischer Zylinder ausgebildet ist und eine osseointegrativ ausgerüstete Mantelfläche hat,
wobei der koronale Implantatbereich (1.2) stufenlos an einen 'apikalen Implantatbereich (1.1) anschliesst,
wobei das Aufbauelement (2) einen apikalen Mantelbereich (2.1) mit unabhängig vom Implantat wählbarer axialer Ausdehnung aufweist und
wobei das Aufbauelement (2) und der koronale Implantatbereich (1.2) derart aneinander angepasst sind, dass der Mantelbereich (2.1) kappenartig über den koronalen Implantatbereich (1.2) stülpbar ist in einer relativ zum Implantat möglichst frei wählbaren Drehposition und eine Saumlinie (2.3) des Mantelbereichs (2.1) an der Mantelfläche des koronalen Implantatbereichs (1.2) anliegt und zusammen mit dieser Mantelfläche einen Mikrospalt bildet,
wobei die wählbare axiale Ausdehnung des apikalen Mantelbereichs (2.1) die axiale Position des Mikrospalts am Implantat bestimmt und ein Verlauf der Saumlinie (2.3) die Form des Mikrospalts bestimmt.

2. Implantatsystem nach Anspruch 1, wobei die Saumlinie (2.3) girlandenförmig ist.

3. Implantatsystem nach Anspruch 2, wobei die Saumlinie (2.3) im Wesentlichen dem Verlauf (7) einer natürlichen Knochenoberfläche um einen Schneidezahn, Eckzahn oder Seitenzahn entspricht.

4. Implantatsystem nach einem der Ansprüche 1 bis 3, wobei der koronale Implantatbereich (1.2) rohrformig ist und eine axiale Vertiefung (1.4) umschliesst, wobei das Aufbauelement (2) einen in die axiale Vertiefung (1.4) einschiebbaren Fortsatz (2.4) aufweist und wobei das Aufbauelement (2) im Bereich der axialen Vertiefung (1.4) am Implantat (1) befestigbar ist.

5. Implantatsystem nach Anspruch 4, wobei die axiale Vertiefung (1.4) die Form eines relativ zur Implantatachse rotationssymmetrischen Hohlzylinders oder Hohlkegels aufweist.

6. Implantatsystem nach einem der Ansprüche 4 oder 5, wobei an der Mantelfläche des koronalen Implantatbereichs (1.2) und an der Innenoberfläche des Mantelbereichs (2.1) und/oder an der Innenoberfläche der axialen Vertiefung (1.4) des koronalen Implantatbereichs (1.2) und an der Aussenoberfläche des Fortsatzes (2.4) Mittel zur Fixierung der Drehposition des Aufbauelementes (2) relativ zum Implantat (1) vorgesehen sind.

7. Implantatsystem nach einem der Ansprüche 4 oder 5, wobei an einer Stirnfläche (1.3) des koronalen Implantatbereiches (1.2) und an entsprechenden Bereichen des Aufbauelementes (2) Mittel zur Fixierung einer Drehposition des Aufbauelementes (2) relativ zum Implantat (1) vorgesehen sind.

8. Implantatsystem nach Anspruch 6 oder 7, wobei die Mittel zur Fixierung der Drehposition eine Mehrzahl von gleichen, gleichmässig verteilten, axial oder radial verlaufenden, ineinandergreifenden Nuten und Kämmen ist.

9. Implantatsystem nach einem der Ansprüche 1 bis 8, wobei das Aufbauelement (2) eine für einen weiteren Aufbau ausgerüstete Mesiostruktur oder eine vollständige prothetische Suprakonstruktion ist.

10. Implantatsystem nach einem der Ansprüche 1 bis 9, wobei das Implantat (1) einen schraubenförmigen, apikalen Implantatbereich (1.1) aufweist.

11. Kit für die Implantation und den Aufbau eines dentalen Implantatsystems nach einem der Ansprüche 1-10, wobei, dass das Kit mindestens ein dentales Implantatsystem gemäss einem der Ansprüche 1-10 aufweist, und
wobei das Kit eine Mehrzahl von Dentalimplantaten (1) mit je dem gleichen koronalen Implantatbereich (1.2) und eine Mehrzahl von Aufbauelementen (2) mit an den koronalen Implantatbereich (1.2) angepassten Mantelbereichen (2.1) hat,
wobei die Mantelbereiche verschiedene axiale Längen aufweisen, und welches Kit ferner mindestens ein Aufbauelement (20), das keinen Mantelbereich hat, aufweist.

12. Kit nach Anspruch 11, wobei die Mantelbereiche mindestens eines Teils der Aufbauelemente (2) verschieden verlaufende Saumlinien (1.3) aufweisen.

13. Kit nach Anspruch 11 oder 12, wobei die Aufbauelemente (2) verschiedene Abwinkelungen aufweisen.

14. Kit nach Anspruch 12 oder 13, wobei die Saumlinien (2.3) der Aufbauelemente (2) in etwa verlaufen wie die natürliche Knochenoberfläche um einen natürlichen Schneidezahn, um einen Eckzahn oder um einen Seitenzahn.

15. Kit nach einem der Ansprüche 11 bis 14, wobei es ferner für die Einstellung der Lage der Saumlinie (2.3) um den koronalen Implantatbereich (1.2) Distanzringe (10) aufweist.

## Claims

1. A dental implant system which comprises a dental implant (1) and at least one abutment (2),
wherein the abutment is fastenable to a coronal face side of the implant (1),
wherein the implant (1) comprises a coronal implant region (1.2) which is designed as a cylinder which is rotationally symmetrical relative to the implant axis and has lateral surface which is designed in an osseo-integrative manner,
wherein the coronal implant region (1.2) connects in a stepless manner to an apical implant region (1.1),
wherein the abutment (2) comprises an apical skirt region (2.1) with an axial extension which can be selected independently of the implant and
wherein the abutment (2) and the coronal implant region (1.2) can be adapted to one another in a manner such that the skirt region (2.1) can be pushed over the coronal implant region (1.2) in a cap-like manner, in a rotation position relative to the implant which can be selected as freely as possible, and a hem line (2.2) of the skirt region (2.1) contacts the lateral surface of the coronal implant region (1.2) and together with this lateral surface forms a micro-gap,
wherein the selectable axial extension of the apical skirt region (2.1) determines the axial position of the micro-gap on the implant, and a course of the hem line (2.3) determines the shape of the micro-gap.

2. An implant system according to claim 1, wherein the hem line (2.3) is scalloped.

3. An implant system according to claim 2, wherein the hem line (2.3) corresponds essentially to the course (7) of a natural bone surface around an incisor, a canine or posterior tooth.

4. An implant system according to one of the claims 1 to 3, wherein the coronal implant region (1.2) is tubular and encompasses an axial recess (1.4), wherein the abutment comprises a continuation (2.4) which is insertable into the axial recess (1.4) and wherein the abutment (2) can be fastened on the implant (1), in the region of the axial recess (1.4).

5. An implant system according to claim 4, wherein the axial recess (1.4) has the shape of a hollow cylinder or hollow cone, which is rotationally symmetrical relative to the implant axis.

6. An implant system according to one of the claims 4 or 5, wherein means for the fixation of the rotation position of the abutment (2) relative to the implant (1) are provided on the lateral surface of the coronal implant region (1.2) and on the inner surface of the skirt region (2.1) and/or on the inner surface of the axial recess (1.4) of the coronal implant region (1.2) and on the outer surface of the continuation (2.4).

7. An implant system according to one of the claims 4 or 5, wherein means for the fixation of a rotation position of the abutment (2) relative to the implant (2) are provided on an end-face (1.3) of the coronal implant region (1.2) and on corresponding regions of the abutment (2).

8. An implant system according to claim 6 or 7, wherein the means for the fixation of the rotation position is a plurality of equal, uniformly distributed, axially or radially running groves and projections meshing into one another.

9. An implant system according to one of the claims 1 to 8, wherein the abutment is a mesio-structure which is designed for a further construction, or a complete prosthetic superstructure.

10. An implant system according to one of the claims 1 to 9, wherein the implant (1) comprises a helical, apical implant region (1.1).

11. A kit for the implantation and the construction of a dental implant system according to one of the claims 1 -10, wherein the kit comprises at least one dental implant system according to one of the claims 1-10, and
wherein the kit comprises a plurality of dental implants (1) each with the same coronal implant region (1.2), and a plurality of abutments (2) with skirt regions adapted (2.1) to the coronal implant region (1.2),
wherein the skirt regions have different axial lengths, and said kit further comprising at least one abutment (20) which has no skirt region.

12. A kit according to claim 11, wherein the skirt regions at least of a part of the abutments (2) comprise differently running hem lines (1.3).

13. A kit according to claim 11 or 12, wherein the abutments (2) have different angled bends.

14. A kit according to claim 12 or 13, wherein the hem lines (2.3) of the abutments (2) run roughly as the natural bone surface around a natural incisor, around a canine, or around a posterior tooth.

15. A kit according to one of the claims 11 to 14, wherein it moreover comprises spacer rings (10) for setting the position of the hem line (2.3) around the coronal implant region (1.2).

## Revendications

1. Système d'implant dentaire qui présente un implant dentaire (1) et au moins un pilier (2),
Le pilier pouvant être fixé sur un côté frontal coronaire de l'implant (1),
l'implant (1) présentant une partie coronaire d'implant (1.2) configurée en cylindre présentant une symétrie de rotation par rapport à l'axe de l'implant et une surface d'enveloppe capable d'ostéo-intégration,
la partie coronaire d'implant (1.2) se raccordant sans gradin à une partie apicale d'implant (1.1),
le pilier (2) présentant une partie apicale d'enveloppe (2.1) dont l'extension axiale peut être sélectionnée indépendamment de l'implant,
le pilier (2) et la partie coronaire d'implant (1.2) étant adaptées l'une à l'autre de telle sorte que la partie d'enveloppe (2.1) puisse être enfichée en forme de capuchon au-dessus de la partie coronaire d'implant (1.2) dans une position de rotation par rapport à l'implant qui peut être sélectionnée le plus librement possible et une ligne de bordure (2.3) de la partie d'enveloppe (2.1) reposant sur la surface d'enveloppe de la partie coronaire d'implant (1.2) et formant un micro-interstice avec cette surface d'enveloppe,
l'extension axiale sélectionnable de la partie apicale d'enveloppe (2.1) définissant la position du micro-interstice sur l'implant et la forme de la ligne de bordure (2.3) définissant la forme du micro-interstice.

2. Système d'implant selon la revendication 1, dans lequel la ligne de bordure (2.3) a la forme d'une guirlande.

3. Système d'implant selon la revendication 2, dans lequel la ligne de bordure (2.3) correspond essentiellement à la forme de la surface naturelle de l'os autour d'une incisive, d'une canine ou d'une molaire.

4. Système d'implant selon l'une des revendications 1 à 3, dans lequel la partie coronaire d'implant (1.2) a une forme tubulaire et englobe un creux axial (1.4), le pilier (2) présentant un appendice (2.4) apte à être inséré dans le creux axial (1.4) et le pilier (2) pouvant être fixé sur l'implant (1) au niveau du creux axial (1.4).

5. Système d'implant selon la revendication 4, dans lequel le creux axial (1.4) présente la forme d'un cylindre creux ou d'un cône creux présentant une symétrie de rotation par rapport à l'axe de l'implant.

6. Système d'implant selon l'une des revendications 4 ou 5, dans lequel des moyens de fixation de la position de rotation du pilier (2) par rapport à l'implant (1) sont prévus sur la surface d'enveloppe de la partie coronaire d'implant (1.2) et sur la surface intérieure de la partie d'enveloppe (2.1) et/ou sur la surface intérieure du creux axial (1.4) de la partie coronaire d'implant (1.2) et sur la surface extérieure de l'appendice (2.4).

7. Système d'implant selon l'une des revendications 4 ou 5, dans lequel des moyens de fixation de la position de rotation du pilier (2) par rapport à l'implant (1) sont prévus sur une surface frontale (1.3) de la partie coronaire d'implant (1.2) et sur des parties correspondantes du pilier (2).

8. Système d'implant selon les revendications 6 ou 7, dans lequel les moyens de fixation de la position de rotation sont formés de plusieurs rainures et peignes identiques, répartis uniformément, s'étendant axialement et radialement et s'engageant les uns dans les autres.

9. Système d'implant selon l'une des revendications 1 à 8, dans lequel le pilier (2) est une mésio-structure permettant encore un habillage ou une superstructure de prothèse complète.

10. Système d'implant selon l'une des revendications 1 à 9, dans lequel l'implant (1) présente une partie apicale d'implant (1.1) de forme hélicoïdale.

11. Trousse pour l'implantation et l'habillage d'un système d'implant dentaire selon l'une des revendications 1 à 10, dans laquelle la trousse présente au moins un système d'implant dentaire selon l'une des revendications 1 à 10,
la trousse possédant plusieurs implants dentaires (1) qui présentent chacun la même partie coronaire d'implant (1.2) et plusieurs éléments d'habillage (2) dont les surfaces d'enveloppe (2.1) sont adaptées à la partie coronaire d'implant (1.2),
les parties d'enveloppe présentant différentes longueurs axiales, la trousse présentant en outre au moins un pilier (20) qui ne présente pas de partie d'enveloppe.

12. Trousse selon la revendication 11, dans laquelle les parties d'enveloppe d'au moins une partie des piliers (2) présentent des lignes de bordure (1.3) de formes différentes.

13. Trousse selon les revendications 11 ou 12, dans laquelle les éléments d'habillage (2) présentent des dièdres différents.

14. Trousse selon les revendications 12 ou 13, dans laquelle les lignes de bordure (2.3) des piliers (2) ont sensiblement la même forme que la surface naturelle de l'os autour d'une incisive naturelle, d'une canine ou d'une molaire.

15. Trousse selon l'une des revendications 11 à 14, qui présente en outre des anneaux d'écartement (10) permettant d'ajuster la position de la ligne de bordure (2.3) autour de la partie coronaire d'implant (1.2).
